# FASCICULE DE BREVET EUROPEEN

(11) **EP 1 535 836 B1**
(45) Date de publication et mention de la délivrance du brevet: **14.06.2006**
(21) Numéro de dépôt: 04292402.7
(22) Date de dépôt: 11.10.2004
(51) Int. Cl.: B64C 9/00

(54) **Procédé permettant d'éviter les vibrations d'une gouverne de direction d'un aéronef**
Verfahren zum Vermeiden von Flugzeugruderschwingungen
Method for avoiding aircraft rudder vibration

(30) Priorité: 27.11.2003 FR 0313912
(43) Date de publication de la demande: 01.06.2005
(73) Titulaire: AIRBUS France, 31060 Toulouse (FR)
(72) Inventeur: Pauly, Bernard, 31700 Blagnac (FR)
(74) Mandataire: Bonnetat, Christian

(56) Documents cités:
- US-A- 1 457 507

## Description

La présente invention concerne un procédé permettant d'éviter les vibrations d'une gouverne de direction d'un aéronef volant sans dérapage.

On sait qu'un gouvernail de direction d'aéronef comprend un empennage vertical fixe et une gouverne de direction mobile. Cette gouverne de direction est reliée à l'empennage vertical fixe par des moyens d'articulation qui forment un axe d'articulation et elle peut tourner autour de ce dernier sous l'action de moyens d'actionnement, tels que des vérins. On sait de plus qu'une telle gouverne de direction comporte deux surfaces aérodynamiques latérales se rejoignant du côté arrière de l'aéronef pour former le bord de fuite de la gouverne de direction mobile, qui est également celui du gouvernail de direction.

Au fur et à mesure du fonctionnement de ladite gouverne de direction, des phénomènes d'usure agrandissent les jeux mécaniques fonctionnels normaux prévus de construction dans lesdits moyens d'articulation et/ou dans les moyens de transmission entre lesdits moyens d'actionnement et ladite gouverne de direction.

En vol normal de l'aéronef, c'est-à-dire à dérapage nul, ladite gouverne de direction se trouve dans le prolongement aérodynamique de l'empennage vertical fixe, dans l'axe de ce dernier, et n'est soumise à pratiquement aucun effet aérodynamique. Cependant, à cause de jeux d'usure agrandis, il peut se faire que, malgré la quasi inexistence des efforts aérodynamiques qui lui sont appliqués, la gouverne de direction se mette à vibrer sous l'effet des turbulences ou instabilités normales de l'écoulement aérodynamique.

Les jeux mécaniques augmentant avec le vieillissement desdits moyens d'articulation et desdits moyens de transmission, il en est de même de l'amplitude des vibrations de ladite gouverne de direction. De telles vibrations, même d'amplitude importante, ne sont pas préjudiciables à la sécurité de l'aéronef, mais elles engendrent des désagréments pour les passagers, qui ressentent des vibrations induites dans la cabine, ainsi qu'un inconfort de pilotage pour le ou les pilotes.

Lorsque ces vibrations atteignent une amplitude inacceptable pour le confort des passagers et des pilotes, il est nécessaire de procéder au remplacement des pièces d'usure desdits moyens d'articulation et/ou desdits moyens de transmission, afin de retrouver de faibles jeux fonctionnels. Une telle opération de remplacement est relativement complexe et elle nécessite en pratique une immobilisation de l'aéronef, dont la durée n'est en général pas compatible avec celle des escales.

Bien entendu, il est possible d'effectuer des opérations de maintenance préventives, en remplaçant lesdites pièces d'usure avant que l'amplitude des vibrations ne soit gênante. De telles opérations préventives peuvent être réalisées au cours de périodes d'interventions programmées sur l'aéronef, mais alors on est conduit à effectuer des interventions et des remplacements de pièces, qui ne sont pas obligatoirement nécessaires.

La présente invention a pour objet de remédier à ces inconvénients. Elle concerne notamment un procédé simple et rapide à mettre en oeuvre, permettant de supprimer les vibrations d'une gouverne de direction en fonctionnement normal et de repousser à une date ultérieure le besoin de remplacer les pièces d'usure, par exemple jusqu'à une opération de maintenance future et programmée, de manière à ne pas pénaliser l'exploitation opérationnelle de l'aéronef.

A cette fin, selon l'invention, le procédé permettant d'éviter les vibrations d'une gouverne de direction d'un aéronef volant sans dérapage, ladite gouverne de direction
- étant reliée à un empennage vertical fixe par des moyens d'articulation qui forment un axe d'articulation,
- pouvant tourner autour dudit axe d'articulation sous l'action de moyens d'actionnement commandables, et ,
- comportant deux surfaces aérodynamiques latérales se rejoignant du côté arrière de l'aéronef pour former un bord de fuite,
lesdites vibrations résultant de jeux mécaniques excessifs dans lesdits moyens d'articulation ou dans des moyens de transmission reliant lesdits moyens d'actionnement commandables et ladite gouverne de direction, est remarquable en ce que :
- sur l'une desdites surfaces aérodynamiques latérales de la gouverne de direction, on fixe un élément aérodynamique saillant apte à engendrer un effet aérodynamique tendant à faire tourner ladite gouverne de direction autour dudit axe d'articulation ; et
- on commande lesdits moyens d'actionnement pour qu'ils contrent l'action dudit élément aérodynamique saillant et qu'ils imposent à ladite gouverne de direction une position d'équilibre en prolongement aérodynamique dudit empennage vertical fixe.

Ainsi, ledit élément aérodynamique saillant crée une dissymétrie des efforts aérodynamiques appliqués à ladite gouverne de direction et engendre une force tendant à faire tourner cette dernière du côté opposé audit élément aérodynamique, autour dudit axe d'articulation. Les moyens d'actionnement (vérins) commandés par le pilote de l'aéronef permettent de braquer ladite gouverne de direction en sens opposé pour la maintenir en position d'équilibre aérodynamique, de façon que l'aéronef ne soit soumis à aucun dérapage. Un tel braquage antagoniste de la gouverne de direction engendre, au niveau desdits moyens d'articulation et desdits moyens de transmission, une force latérale qui empêche ladite gouverne de direction de vibrer dans des conditions normales de vol.

On remarquera que le brevet US-1 457 507 prévoit, sur des surfaces sujettes à des forces aérodynamiques, des bandes à inclinaison réglable afin d'ajuster les caractéristiques dynamiques desdites surfaces. En aucun cas, de telles bandes inclinées ne sont prévues pour éviter des vibrations résultant de jeux mécaniques.

Ledit élément aérodynamique prévu par la présente invention peut présenter des formes et des dimensions diverses, qu'il convient d'adapter aux dimensions de la gouverne de direction et aux effets aérodynamiques recherchés. Ledit élément aérodynamique saillant peut présenter une forme allongée et il peut être disposé de façon au moins approximativement parallèle au bord de fuite de ladite gouverne de direction. Par exemple, ledit élément aérodynamique saillant est un tronçon de cornière fixé par l'une de ses ailes sur ladite surface aérodynamique latérale, l'autre aile dudit tronçon de cornière faisant saillie par rapport à cette dernière surface aérodynamique latérale.

Il est évidemment avantageux de limiter, autant que possible, la taille dudit élément aérodynamique afin d'éviter des effets négatifs sur la traînée et la consommation de carburant de l'avion, sans pour autant nuire à l'effet recherché. A cet effet, il est préférable que ledit élément aérodynamique saillant soit fixé au voisinage dudit bord de fuite de ladite gouverne de direction. Ainsi, la force aérodynamique engendrée par ledit élément aérodynamique peut bénéficier d'un bras de levier important pour tendre à faire tourner ledit élément autour de l'axe d'articulation.

Des essais ont montré que, dans ces conditions, pour une gouverne de direction de 6 m d'envergure, un tronçon de cornière de longueur comprise entre 400 et 800 mm, avec des ailes d'une hauteur de 12 mm, donnait des résultats satisfaisants, comme élément aérodynamique susceptible d'éviter les vibrations de ladite gouverne.

De préférence, ledit élément aérodynamique saillant est fixé de façon amovible sur ladite gouverne de direction. Ainsi, ledit élément aérodynamique peut être monté de façon provisoire sur ladite gouverne de direction lorsque des jeux mécaniques importants apparaissent dans les moyens d'articulation et/ou les moyens de transmission et être démonté lorsque les pièces présentant ces jeux importants ont été remplacées. Dans ce but, ledit élément aérodynamique saillant peut être fixé sur ladite surface aérodynamique latérale au moyen d'éléments de fixation complémentaires dont certains sont montés à demeure sur ladite gouverne de direction mobile. Ces éléments de fixation complémentaires comportent avantageusement des vis et des écrous, lesdits écrous étant incorporés à ladite surface aérodynamique latérale, que, de préférence, ils affleurent.

Les figures du dessin annexé feront bien comprendre comment l'invention peut être réalisée. Sur ces figures, des références identiques désignent des éléments semblables.
La figure 1 est une vue latérale d'un avion civil gros porteur.
La figure 2 est une vue latérale, schématique et partielle, agrandie et avec arrachement, du gouvernail de direction de l'avion de la figure 1.
La figure 3 est une section horizontale schématique dudit gouvernail de direction selon les lignes III-III des figures 1 et 2.
La figure 4 illustre schématiquement le mode d'action de l'élément aérodynamique conformément à la présente invention.
La figure 5 illustre schématiquement un exemple de fixation dudit élément sur la gouverne de direction.

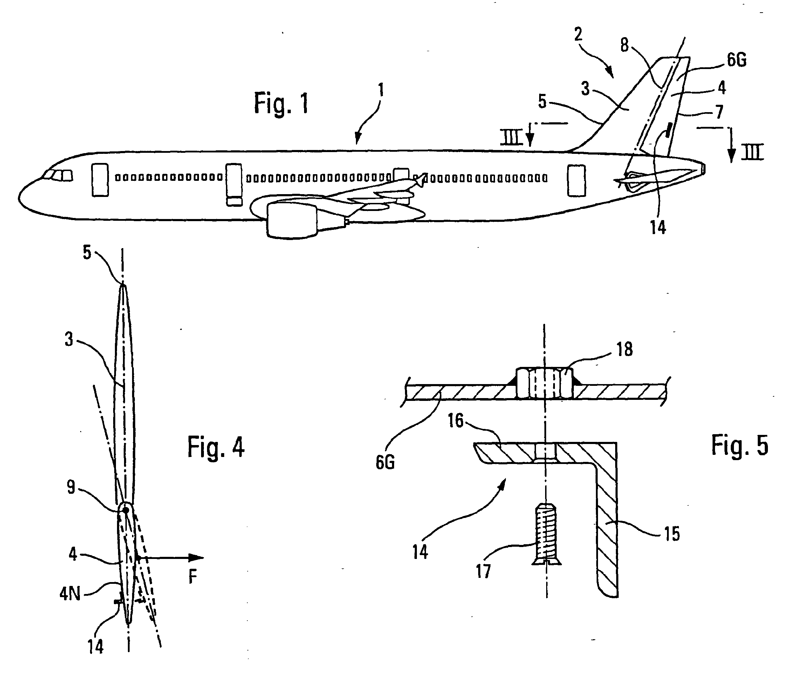

L'avion civil gros porteur 1, montré sur la figure 1, comporte, au voisinage de sa queue, un gouvernail de direction 2 comprenant un empennage vertical fixe 3 et une gouverne de direction mobile 4.

Du côté avant, l'empennage vertical fixe 3 présente un bord d'attaque 5, constituant le bord d'attaque dudit gouvernail de direction 2.

Par ailleurs, la gouverne de direction mobile 4 comporte deux surfaces aérodynamiques latérales 6G et 6D se rejoignant du côté arrière de l'avion 1 pour former le bord de fuite 7 de ladite gouverne 4 et dudit gouvernail 2.

La gouverne de direction 4 est montée rotative par rapport à l'empennage vertical fixe 3, autour d'un axe d'articulation 8, défini par un arbre 9 solidaire de la gouverne de direction 4 et pouvant tourillonner dans des paliers 10, solidaires de l'empennage vertical 3.

L'arbre 9 --et donc la gouverne de direction 4-- peut être entraîné en rotation, dans les deux sens, autour de l'axe d'articulation 8 par des vérins 11 montés dans l'empennage vertical 3 et commandés par le pilote de l'avion 1 par l'intermédiaire de lignes de commande 11 A. Pour ce faire, les extrémités libres des tiges des vérins 11 sont articulées, par exemple par des rotules 12, sur des manetons 13 solidaires de l'arbre 9.

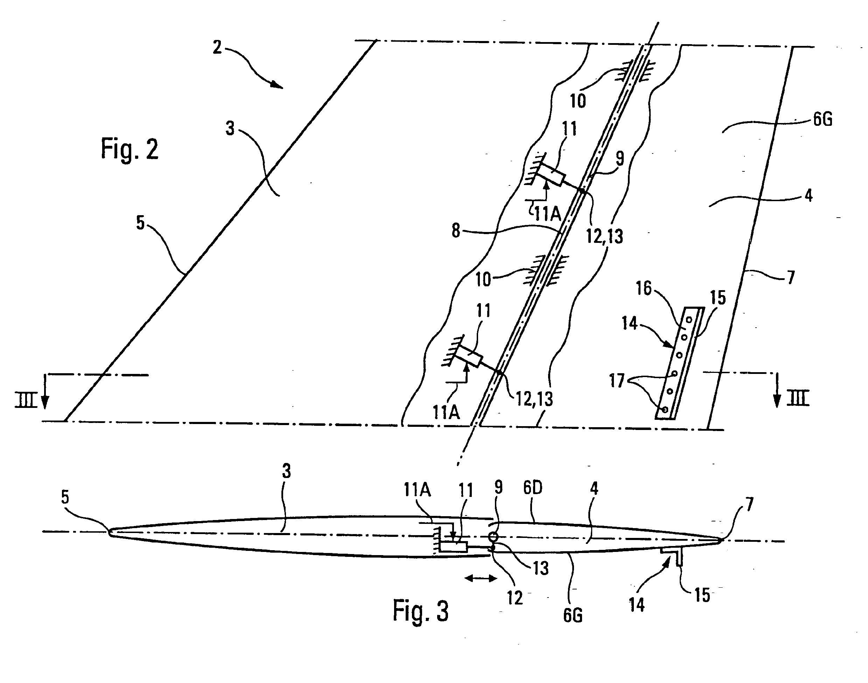

Lorsque l'avion 1 vole sans déraper, la gouverne de direction 4 se trouve dans une position d'équilibre 4N en prolongement aérodynamique de l'empennage vertical 3, comme cela est illustré sur les figures 3 et 4. Cependant, si des jeux mécaniques trop importants, résultant de l'usure, apparaissent dans les rotules 12 et/ou les paliers 10, la gouverne de direction 4 peut entrer en vibrations autour de cette position d'équilibre 4N.

Lorsque les effets de ces vibrations deviennent inacceptables pour le confort des passagers de l'avion 1 et/ou pour le pilotage de l'avion 1, conformément à l'invention, on fixe sur l'une des surfaces aérodynamiques latérales de la gouverne mobile 4, par exemple la surface aérodynamique latérale 6G, un élément aérodynamique 14 faisant saillie par rapport à cette dernière.

De ce fait, on crée une dissymétrie des efforts aérodynamiques appliqués à la gouverne de direction 4, qui tend alors à pivoter autour de l'axe d'articulation 8 sous l'action d'une force transversale F, engendrée par l'élément aérodynamique 14, comme cela est illustré en pointillés sur la figure 4.

Pour maintenir la gouverne de direction 4 dans la position d'équilibre 4N, le pilote est obligé de commander les vérins 11 (par les lignes 11 A), dans le sens d'un contre-braquage de ladite gouverne de direction 4. Il en résulte une force latérale qui, en agissant sur l'articulation 9, 10 et sur les rotules 1 2, empêche ladite gouverne de direction 4 de vibrer.

Afin que, avec un élément aérodynamique 14 de petite taille, le couple de rotation exercé par la force F soit suffisamment élevé pour nécessiter un braquage antagoniste de la gouverne de direction 4 apte à éliminer les vibrations, ledit élément aérodynamique est disposé au voisinage du bord de fuite 7.

Cet élément aérodynamique 14 peut être constitué par un tronçon de cornière, dont une aile 15 est au moins sensiblement orthogonale à la surface aérodynamique 6G, alors que l'autre aile 16 dudit tronçon de cornière sert à la fixation de celui-ci sur ladite surface aérodynamique 6G, par exemple au moyen de vis 17 coopérant avec des écrous 18 incorporés à demeure dans ladite surface aérodynamique 6G (voir la figure 5)

On comprendra aisément qu'avec un tel système de fixation, l'élément aérodynamique 14 peut aisément être monté sur la gouverne de direction 4 et être démonté de cette dernière. Ainsi, il peut être monté provisoirement tant que les jeux dans l'articulation 9, 10 et/ou dans les rotules 12 sont excessifs, mais être démonté dès que ces jeux excessifs ont été éliminés et remplacés par des jeux fonctionnels normaux.

## Revendications

1. Procédé permettant d'éviter les vibrations d'une gouverne de direction (4) d'un aéronef (1) volant sans dérapage, ladite gouverne de direction (4)
- étant reliée à un empennage vertical fixe (3) par des moyens d'articulation (9, 10) qui forment un axe d'articulation (8),
- pouvant tourner autour dudit axe d'articulation (8) sous l'action de moyens d'actionnement commandables (11), et
- comportant deux surfaces aérodynamiques latérales (6G et 6D) se rejoignant du côté arrière de l'aéronef (1) pour former un bord de fuite (7),
lesdites vibrations résultant de jeux mécaniques excessifs dans lesdits moyens d'articulation (9, 10) ou dans des moyens de transmission (12) reliant lesdits moyens d'actionnement commandables (11) et ladite gouverne de direction (4),
où
- sur l'une (6G) desdites surfaces aérodynamiques latérales (6G et 6D) de la gouverne de direction (4), on fixe un élément aérodynamique saillant (14) apte à engendrer un effet aérodynamique tendant à faire tourner ladite gouverne de direction (4) autour dudit axe d'articulation (8) ; et
- on commande lesdits moyens d'actionnement (11) pour qu'ils contrent l'action dudit élément aérodynamique saillant (14) et qu'ils imposent à ladite gouverne de direction (4) une position d'équilibre (4N) en prolongement aérodynamique dudit empennage vertical fixe (3).

2. Procédé selon la revendication 1,
**caractérisé en ce qu'**on fixe ledit élément aérodynamique saillant (14) au voisinage dudit bord de fuite (7) de ladite gouverne de direction (4).

3. Procédé selon l'une des revendications 1 ou 2,
**caractérisé en ce qu'**on fixe ledit élément aérodynamique saillant (14) de façon amovible sur ladite gouverne de direction (4).

4. Procédé selon la revendication 3,
**caractérisé en ce qu'**on monte ledit élément aérodynamique saillant (14) de façon provisoire sur ladite gouverne de direction 4, lorsque lesdits jeux mécaniques sont excessifs, et **en ce que** l'on démonte, lorsque lesdits jeux mécaniques correspondent aux jeux fonctionnels normaux.

5. Procédé (1) selon l'une des revendications 1 à 4,
**caractérisé en ce qu'**on fixe ledit élément aérodynamique saillant (14) sur ladite surface aérodynamique latérale (6G) au moyen d'éléments de fixation complémentaires (17, 18) dont certains (18) sont montés à demeure sur ladite gouverne de direction mobile (4).

6. Procédé (1) selon la revendication 5,
**caractérisé en ce qu'**on utilise des éléments de fixation complémentaires comportant des vis (17) et des écrous (18) et **en ce qu'**on incorpore lesdits écrous (18) à ladite surface aérodynamique latérale (6G).

7. Procédé (1) selon l'une des revendications 1 à 6,
**caractérisé en ce qu'**on utilise un élément aérodynamique saillant (14) présentant une forme allongée et **en ce qu'**on le dispose, sur ladite surface aérodynamique latérale (6G), de façon au moins approximativement parallèle au bord de fuite (7) de ladite gouverne de direction (4).

8. Procédé selon la revendication 7,
**caractérisé en ce qu'**on utilise un élément aérodynamique saillant (14) constitué par un tronçon de cornière que l'on fixe par l'une de ses ailes (16) sur ladite surface aérodynamique latérale (6G), l'autre aile (15) dudit tronçon de cornière faisant saillie par rapport à cette dernière surface aérodynamique latérale (6G).

## Claims

1. A method making it possible to prevent vibration of the rudder (4) of an aircraft (1) flying without sideslip, the said rudder (4)
- being connected to a fixed vertical stabilizer (3) by articulation means (9, 10) forming an articulation axis (8),
- being able to rotate about the said articulation axis (8) under the action of controllable actuating means (11), and
- comprising two lateral aerodynamic surfaces (6G and 6D) meeting at the rear end of the aircraft (1) in order to form a trailing edge (7),
the said vibration resulting from excessive mechanical plays in the said articulation means (9, 10) or in transmission means (12) connecting the said controllable actuating means (11) and the said rudder (4), **characterized in that**:
- on one (6G) of the said lateral aerodynamic surfaces (6G and 6D) of the rudder (4), there is fixed a protruding aerodynamic element (14) capable of generating an aerodynamic effect tending to rotate the said rudder (4) about the said articulation axis (8); and
- the said actuating means (11) are controlled such that they counter the action of the said protruding aerodynamic element (14) and such that they impose on the said rudder (4) a position of equilibrium (4N) in aerodynamic extension of the said fixed vertical stabilizer (3).

2. The method as claimed in claim 1,
**characterized in that** the said protruding aerodynamic element (14) is fixed in the vicinity of the trailing edge (7) of the said rudder (4).

3. The method as claimed in one of claims 1 or 2,
**characterized in that** the said protruding aerodynamic element (14) is fixed in a detachable manner onto the said rudder (4).

4. The method as claimed in claim 3,
**characterized in that** the said protruding aerodynamic element (14) is fixed in a temporary manner onto the said rudder (4) when the said mechanical plays are excessive and is removed from it when the said mechanical plays correspond to normal operational plays.

5. The method as claimed in anyone of claims 1 to 4,
**characterized in that** the said protruding aerodynamic element (14) is fixed on the said lateral aerodynamic surface (6G) by means of complementary attachment elements (17, 18) some of which are fixed permanently on the said mobile rudder (4).

6. The method (1) as claimed in claim 5,
**characterized in that** the said complementary attachment elements comprise screws (17) and nuts (18) and the said nuts (18) are incorporated in the said lateral aerodynamic surface (6G).

7. The method (1) as claimed in anyone of claims 1 to 6,
**characterized in that** the said protruding aerodynamic element (14) has an elongated shape and is disposed, on the said lateral aerodynamic surface (6G), in a way that is at least approximately parallel with the trailing edge (7) of the said rudder (4).

8. The method (1) as claimed in claim 7,
**characterized in that** the said protruding aerodynamic element (14) is a length of angle section fixed by one of its flanges (16) to the said lateral aerodynamic surface (6G), the other flange (15) of the said length of angle section protruding with respect to the said lateral aerodynamic surface (6G).

## Patentansprüche

1. Verfahren zum Vermeiden der Schwingungen eines Seitenruders (4) eines Flugzeugs (1), das ohne Schieben fliegt, wobei das Seitenruder (4)
- mit Gelenkmitteln (9, 10), die eine Drehachse (8) bilden, mit einer feststehenden senkrechten Leitwerksfläche (3) verbunden ist,
- sich unter der Wirkung von steuerbaren Betätigungsmitteln (11) um die Drehachse (8) drehen kann, und
- zwei seitliche aerodynamische Flächen (6G und 6D) aufweist, die zum Heck des Flugzeugs (1) hin zusammentreffen und dort eine Hinterkante (7) bilden,
wobei die Schwingungen durch zu großes mechanisches Spiel in den Gelenkmitteln (9, 10) oder in Übertragungsmitteln (12), die die steuerbaren Betätigungsmittel (11) und das Seitenruder (4) verbinden, bedingt sind,
wobei
- auf einer (6G) der seitlichen aerodynamischen Flächen (6G und 6D) des Seitenruders (4) ein überstehendes aerodynamisches Element (14) befestigt wird, das geeignet ist, einen aerodynamischen Effekt zu erzeugen, der bewirkt, dass sich das Seitenruder (4) um die Drehachse (8) dreht; und
- die Betätigungsmittel (11) so gesteuert werden, dass sie der Wirkung des überstehenden aerodynamischen Elements (14) entgegenwirken und das Seitenruder (4) in eine Gleichgewichtsposition (4N) in aerodynamischer Verlängerung der feststehenden senkrechten Leitwerksfläche (3) zwingen.

2. Verfahren nach Anspruch 1,
**dadurch gekennzeichnet,**
**dass** das überstehende aerodynamische Element (14) in der Nähe der Hinterkante (7) des Seitenruders (4) befestigt wird.

3. Verfahren nach einem der Ansprüche 1 oder 2,
**dadurch gekennzeichnet,**
**dass** das überstehende aerodynamische Element (14) abnehmbar an dem Seitenruder (4) befestigt wird.

4. Verfahren nach Anspruch 3,
**dadurch gekennzeichnet,**
**dass** das überstehende aerodynamische Element (14) provisorisch an dem Seitenruder (4) montiert wird, wenn das mechanische Spiel zu groß ist, und es von diesem abmontiert, wenn das mechanische Spiel dem normalen funktionsgerechten Spiel entspricht.

5. Verfahren (1) nach einem der Ansprüche 1 bis 4,
**dadurch gekennzeichnet,**
**dass** das überstehende aerodynamische Element (14) mit Hilfe von komplementären Befestigungselementen (17, 18) an der seitlichen aerodynamischen Fläche (6G) befestigt wird, von denen einige (18) zum dauerhaften Verbleib an dem beweglichen Seitenruder (4) montiert sind.

6. Verfahren (1) nach Anspruch 5,
**dadurch gekennzeichnet,**
**dass** komplementäre Befestigungselemente verwendet werden, die Schrauben (17) und Muttern (18) aufweisen, und dass man die Muttern (18) in der seitlichen aerodynamischen Fläche (6G) versenkt.

7. Verfahren (1) nach einem der Ansprüche 1 bis 6,
**dadurch gekennzeichnet,**
**dass** ein überstehendes aerodynamisches Element (14) von langgezogener Form verwendet wird, und dass es auf der seitlichen aerodynamischen Fläche (6G) wenigstens annähernd parallel zu der Hinterkante (7) des Seitenruders (4) angeordnet wird.

8. Verfahren nach Anspruch 7,
**dadurch gekennzeichnet,**
**dass** ein überstehendes aerodynamisches Element (14) verwendet wird, das aus einem Winkeleisenstück besteht, das mit einem seiner Schenkel (16) an der seitlichen aerodynamischen Fläche (6G) befestigt wird, während der andere Schenkel (15) des Winkeleisenstücks über die seitliche aerodynamische Fläche (6G) hinausragt.
